(19) Europäisches Patentamt
European Patent Office
Office européen des brevets

(11) **EP 3 168 102 B1**

(12) **EUROPEAN PATENT SPECIFICATION**

(45) Date of publication and mention
of the grant of the patent:
**23.10.2019 Bulletin 2019/43**

(51) Int Cl.:
***B60W 40/09*** *(2012.01)*

(21) Application number: **16198537.9**

(22) Date of filing: **11.11.2016**

(54) **METHOD FOR EVALUATING A VEHICULAR DRIVING STYLE AND DEVICE IMPLEMENTING THE METHOD**

VERFAHREN ZUR BEWERTUNG EINES FAHRZEUGFAHRSTILS UND VORRICHTUNG ZUR IMPLEMENTIERUNG DES VERFAHRENS

PROCÉDÉ D'ÉVALUATION DE STYLE DE CONDUITE DE VÉHICULE ET DISPOSITIF METTANT EN OEUVRE LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2015 IT UB20155454**

(43) Date of publication of application:
**17.05.2017 Bulletin 2017/20**

(73) Proprietor: **IVECO S.p.A.**
**10156 Torino (IT)**

(72) Inventor: **Titli, Andrea Pietro**
**10138 Torino (IT)**

(74) Representative: **Fiume, Orazio et al**
**Studio Torta S.p.A.**
**Via Viotti, 9**
**10121 Torino (IT)**

(56) References cited:
**EP-A1- 1 256 479          WO-A2-2012/069915**
**DE-A1-102009 049 367    US-A1- 2009 076 697**
**US-A1- 2011 153 175**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of application of the invention

The present invention refers to the field of vehicular feedback methods and systems for correcting bad driving habits.

Discussion of the prior art

Bad driving habits have a considerable impact on the fuel consumption of a vehicle and, as a consequence, on environmentally harmful emissions. Therefore, devices and methods for conveying feedback to the driver in order to discourage incorrect driving styles have already been developed.

For example, sudden and violent acceleration followed by rapid braking result in excessive fuel consumption and deterioration of the vehicle's mechanical components.

One of the best-known instantaneous feedback systems is the economy driving system which displays the instantaneous fuel consumption based on the position of the accelerator pedal or fuel injection data.

US20130173111 describes a device and method for assessing a driver's acceleration behaviour in the short and medium-to-long term using fuzzy logic. This system calculates an instantaneous acceleration score and an acceleration score over the medium-to-long term.

Deceleration behaviour scores are also displayed, but these are not relevant for the purposes of the present invention. The device is based on the acquisition of various parameters, including the driveline output power, the position of the accelerator and other factors.

WO2012069915 discloses a single score directly in one step, considering accelerator pedal operation, followed by brake pedal operation. The accelerator pedal corresponds to the acceleration manoeuvre, and the brake pedal corresponds to the second event triggering such calculation. US20090076697 discloses a similar approach, relying on past driving history to determine a single score.

Summary of the invention

The main object of the present invention is to provide a simpler algorithm that requires less computing power while remaining reliable according to the general purposes of feedback devices.

According to the present invention, each acceleration manoeuvre is analysed to calculate an instantaneous score, referred to as the BaseScore, which is used to calculate a ManoeuvreScore and then a medium-to-long-term score, as the mean of the ManoeuvreScores. The mean score is calculated iteratively, that is to say, in steps, i.e., with each acceleration manoeuvre.

The idea at the basis of the present invention is to limit the analysis interval of each manoeuvre to calculate the BaseScore. The analysis interval is thus limited/interrupted by the occurrence of at least one event.

Preferably, the ManoeuvreScore is a function not only of the BaseScore, but of the type of interruption event that determined the interruption of the observation of the acceleration manoeuvre.

Subsequently, the mean of the ManoeuvreScores is updated or is not updated on the basis of the BaseScore value and/or the type of interruption event that determined the interruption of said analysis interval.

In the calculation of the ManoeuvreScore, it has been found that when the time intervals considered are too long, certain kinds of aggressive driving behaviour, which may also pose a hazard to other road users as well as to the actual driver, are underestimated.

According to the present invention, the calculation of the mean score may

- not be updated or it may
- be updated with the possible addition of penalizations based on the calculated BaseScore value and according to the type of event that limited/interrupted said analysis interval.

A further object of the present invention is a device implementing said method and a vehicle implementing said device.

The claims describe preferred embodiments of the invention and form an integral part of the present description.

Brief description of the drawings

Further purposes and advantages of the present invention will become clear from the following detailed description of a preferred embodiment (and alternative embodiments) thereof and from the accompanying drawings which are merely illustrative and not limiting, in which:

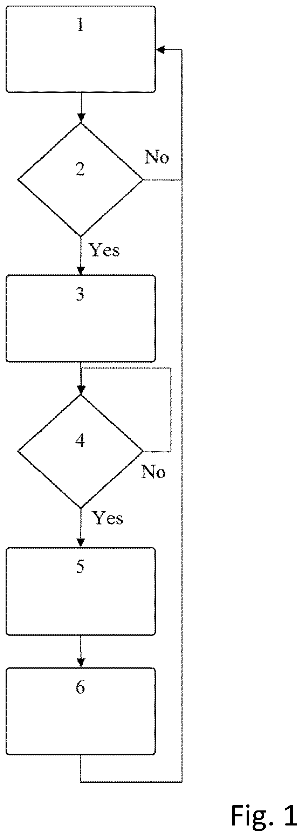

figure 1 is a flow diagram of a preferred implementation of the present invention.

In the figures the same reference numerals and letters indicate the same parts or components.
Within the scope of the present description, the term "second" component does not imply the presence of a "first" component. Such terms are simply used for the sake of clarity and should not be considered as limiting the scope of the invention.

Detailed description of embodiments of the invention

The method according to the invention, implemented in response to an acceleration by the driver of a vehicle, will now be described.
It is understood that the driver makes the vehicle accelerate by operating an acceleration control, usually a pedal. According to the present invention the method for evaluating a driving style comprises the following of steps performed in sequence:

- determination of a "BaseScore" relative to an acceleration manoeuvre, as a function of a mean position of a vehicle accelerator pedal in a time interval of observation,
- interruption of said observation interval on the basis of an interruption event, in which said interruption event can be of two or more types,
- calculation of a ManoeuvreScore, as a function of a value of said BaseScore and a type of interruption event.

Preferably, the acceleration manoeuvre is recognized when the accelerator pedal is pressed down further so that the pressure increases, preferably in percentage terms, by more than a third predefined threshold, for example 3% or 5%. When this increased pressure on the accelerator is recognized as an acceleration manoeuvre the so-called observation interval starts, and then ends when one of said two or more events occurs.
The BaseScore is a function of an average acceleration calculated in said observation time interval.
An interruption event strictly consists of one from among:

- type one: when a variation in a vehicular speed or an engine speed is lower than a first predefined vehicular speed threshold, for example 3 km/h, or engine speed threshold, for example 20 rpm,
- type two: when a release of the accelerator pedal determines a negative variation in the pressure on the accelerator pedal, higher than a second predefined threshold,

- type three: when a timeout intervenes.

A ManoeuvreScore is thus calculated, and is equal to

- said BaseScore if said observation interval is not interrupted by said third type of event,
- said BaseScore from which a penalization value is subtracted when said observation interval is interrupted by said third type of event and when said BaseScore is less than or equal to a first predefined BaseScore value.

The method may comprise a step of iteratively calculating a mean score, on the basis of a mean of said BaseScore manoeuvre scores, and of skipping an iteration step, that is, rejecting the BaseScore of that iteration, when said observation interval is interrupted by said third type of event AND when said BaseScore is higher than said first predefined BaseScore value TH1.
Furthermore, the ManoeuvreScore is a function not only of the BaseScore and of the type of event that determined the interruption of the observation interval, but also of coefficients S and/or L which take into account the slope of the road and the load of the vehicle, so that:

$$\mathtt{ManoeuvreScore \; = \; (S+L)* \; BaseScore}$$

when Timeout = false

$$\mathtt{ManoeuvreScore \; = \; (S+L)*(BaseScore \; - \; P)}$$

when CTimeout = true and BaseScore <= TH1
ManoeuvreScore = ignored when CTimeout = true and BaseScore > TH1.

Where P stands for a predefined penalization value.

Furthermore, "CTimeout = false" means no timeout has intervened and that the observation time interval was therefore interrupted by another different event, for example one of the other two, the first or the second, described.

Furthermore, "ignored" means the ManoeuvreScore will not be considered in the calculation of the overall score. For example, if BaseScore is between 0 and 100, the penalization P may be 30 and TH1 50.

Figure 1 shows a preferred implementation of the method according to the present invention:

Step 1: Monitoring of the position of the accelerator pedal, to detect any increases,

Step 2: if the pressure on the accelerator pedal is increased by at least a third threshold TH3 (Yes), the value of said third threshold TH3 can be expressed in percentage terms, for example 3% or 5%, with respect to a position of complete pressure (100%), then

Step 3: beginning of the observation interval and calculation of the BaseScore equal to the mean of the accelerator position, by means of moving average calculation BaseScore = F (mean position of accelerator pedal), on the observation interval, otherwise (Step 2 = NO) the accelerator pedal position continues to be monitored (Step 1),

Point 4: occurrence of an interruption event of the observation interval, which may be of three types:

a): when a variation in a vehicular speed or an engine speed is lower than a predefined vehicular speed threshold or a predefined engine speed threshold,

b) : when a release of the accelerator pedal determines a negative pressure variation on the accelerator pedal, higher than a second predefined threshold Th2,

c): when a timeout intervenes, preferably with a duration of 6 seconds from the beginning of the observation interval;

Step 5: interruption of the observation interval and interruption of the BaseScore calculation and calculation of the ManoeuvreScore:

$$\text{ManoeuvreScore} = (S+L)* \text{BaseScore}$$

when CTimeout = false

$$\text{ManoeuvreScore} = (S+L)*(\text{BaseScore} - P)$$

when CTimeout = true and BaseScore <= TH1
ManoeuvreScore = ignored when CTimeout = true and BaseScore > TH1.

Step 6: calculation of a mean score as moving average on the ManoeuvreScores, skipping a cycle if a respective ManoeuvreScore is ignored.

The device according to the present invention may comprise a vehicle display on which the BaseScore and the mean score are displayed. Both values may be expressed in percentage terms. The device is also preferably connected to the vehicle's CAN network so as to be able to acquire parameters such as engine speed and/or vehicle speed, position of the accelerator pedal, total vehicle load, usually estimated by the ESP control unit, and the slope of the road, usually estimated by an inclinometer.

From the above description it is clear that the present invention is not based on the value of the engine output torque and therefore it does not acquire said value.

Therefore, the present invention may advantageously be implemented by means of a computer program comprising coding means to implement one or more steps of the method, when such program is run on a computer. Thus, the scope of protection includes said computer program and also computer readable means comprising a recorded message, said computer readable means comprising program code means designed to implement one or more of the steps of the method, when said program is run on a computer.

From the above description it is clear that the power required to calculate the BaseScore, ManoeuvreScore and mean score is extremely low. Nonetheless, the feedback conveyed to the driver as a function of his or her driving style is very similar to the feedback provided using much more complex methods of calculation.

From the above description it will be possible for the person skilled in the art to implement the invention without the need for any additional construction details. The elements and the characteristics illustrated in the different preferred embodiments, including the drawings, may be combined without departing from present application as claimed in the appended claims. What described in the description of the state of the art serves merely to ensure a better understanding of the invention and does not constitute a declaration concerning the existence of that described.

**Claims**

1. Method for evaluating (feedback) a vehicular driving style comprising the following steps in sequence:

   - determination of a BaseScore relative to an acceleration manoeuvre, as a function of a mean position of a vehicle accelerator pedal in a time interval of observation,
   - interruption of said observation interval on the basis of an interruption event, in which said interruption event can be of two or more types,
   - calculation of a ManoeuvreScore, as a function of a value of said BaseScore and of the type of event, among said two or more types of event, which has caused said interruption of said observation interval.

2. Method according to claim 1, wherein said interruption event consists in just one from among:

   - first type (a): when a variation in a vehicular speed or an engine speed is lower than a predefined vehicular speed threshold or a predefined engine speed threshold,
   second type (b): when a release of the accelerator pedal determines a negative pressure variation on the accelerator pedal higher than a second predefined threshold,
   - third type (c): when a timeout intervenes.

3. Method according to any one of the preceding claims, wherein said ManoeuvreScore is equal to

   - said BaseScore if said observation interval is not interrupted by said third type of event,
   - said BaseScore from which a penalization value is subtracted when said observation interval is interrupted by said third type of event and when said BaseScore is lower than or equal to a first predefined BaseScore value (TH1).

4. Method according to any one of the preceding claims, further comprising a step of iteratively calculating a mean score of said ManoeuvreScores

5. Method according to claim 3 or 4, further comprising a step of iteratively calculating a mean score, on the basis of a mean of said ManoeuvreScores, and skipping an iteration step when said observation interval is interrupted by said third type of event and when a corresponding BaseScore is higher than said first predefined BaseScore value (TH1).

6. Method according to any one of the preceding claims, wherein said observation interval begins when a pressure increase on the accelerator pedal is higher than a third predefined threshold (TH3).

7. Method according to any one of the preceding claims comprising the following steps performed in sequence:

   - (Step 1) Monitoring of the position of the accelerator pedal;
   - (Step 2) if the pressure on the accelerator pedal is increased by at least a third threshold TH3 (Yes), the value of said third threshold can be expressed in percentage terms, for example 3%, with respect to a position of complete pressure (100%), then
   - (Step 3) beginning of the observation interval and calculation of the BaseScore equal to the mean of the accelerator position, by means of moving average calculation BaseScore = F (mean position of the accelerator pedal), on the observation interval, otherwise (Step 2 = NO) the accelerator pedal position continues to be monitored (Step 1) ;
   - (Point 4) occurrence of an interruption event of the observation interval, which can be one from among:

     a) when a variation in a vehicular speed or an engine speed is lower than a predefined vehicular speed threshold or a predefined engine speed threshold,
     b): when a release of the accelerator pedal determines a negative pressure variation on the accelerator pedal, higher than a second predefined threshold Th2,
c): when a timeout intervenes, preferably with a duration of 6 seconds from the beginning of the observation interval;

- (Step 5) interruption of the observation interval and interruption of the BaseScore calculation and calculation of the ManoeuvreScore:

$$\text{ManoeuvreScore} = (S+L) * \text{BaseScore}$$

when CTimeout = false

$$\text{ManoeuvreScore} = (S+L) * (\text{BaseScore} - P)$$

when CTimeout = true and BaseScore <= TH1
ManoeuvreScore = ignored when CTimeout = true and BaseScore > TH1.

- (Step 6) calculation of a mean score as moving average on the ManoeuvreScores, skipping a cycle if a respective ManoeuvreScore is ignored.

8. Device for evaluating a vehicular driving style comprising processing means, man/machine interface means and interface means for acquiring vehicular parameters such as at least a position of the accelerator pedal, a speed of the engine and/or a vehicular speed, wherein said processing means are configured to carry out all the steps of any one of the preceding claims from 1 to 8.

9. Terrestrial vehicle comprising a device for evaluating a vehicular driving style according to claim 8.

**Patentansprüche**

1. Verfahren zur Evaluierung eines Fahrstils (Rückmeldung) eines Fahrzeugs, umfassend die folgenden Schritte in Reihenfolge:

- Bestimmung einer Basisbewertung (BaseScore) relativ zu einem Beschleunigungsmanöver, als eine Funktion einer Durchschnittsposition eines Fahrzeuggaspedals in einem Zeitintervall der Beobachtung,
- Unterbrechung des Beobachtungsintervalls auf der Basis eines Unterbrechungsereignisses, wobei es zwei oder mehr Typen des Unterbrechungsereignisses geben kann,
- Berechnung einer Manöverbewertung (ManoevreScore) als eine Funktion eines Wertes der Basisbewertung und des Typs des Ereignisses unter den zwei oder mehr Typen des Ereignisses, welche die Unterbrechung des Beobachtungsintervalls verursacht hat.

2. Verfahren nach Anspruch 1, wobei das Unterbrechungsereignis aus nur einem der folgenden besteht:

- erster Typ (a): wenn eine Abweichung der Fahrzeuggeschwindigkeit oder der Motordrehzahl geringer als ein vordefinierter Schwellenwert der Fahrzeuggeschwindigkeit oder ein vordefinierter Schwellenwert der Motordrehzahl ist,
- zweiter Typ (b): wenn ein Loslassen des Gaspedals eine negative Druckschwankung auf das Gaspedal, höher als ein zweiter vordefinierter Schwellenwert, verursacht,
- dritter Typ (c): wenn eine Zeitüberschreitung eintritt.

3. Verfahren nach einem der vorstehenden Ansprüche, wobei die Manöverbewertung ist gleich

- der Basisbewertung, falls das Beobachtungsintervall nicht vom dritten Typ des Ereignisses unterbrochen wird,
- der Basisbewertung, von der ein Strafwert abgezogen wird, wenn das Beobachtungsintervall vom dritten Typ des Ereignisses unterbrochen wird und wenn die Basisbewertung niedriger oder gleich einem ersten vordefinierten Wert (TH1) der Basisbewertung ist.

4. Verfahren nach einem der vorstehenden Ansprüche, ferner umfassend ein Schritt der iterativen Berechnung eines Durchschnittwerts der Manöverbewertungen.

5. Verfahren nach Anspruch 3 oder 4, ferner umfassend ein Schritt der iterativen Berechnung eines Durchschnittwerts auf Basis eines Durchschnittes der Manöverbewertungen und Überspringen eines Iterationsschritts, wenn das Beobachtungsintervall vom dritten Typ des Ereignisses unterbrochen wird und wenn eine entsprechende Basisbewertung höher als der erste vordefinierte Wert (TH1) der Basisbewertung ist.

6. Verfahren nach einem der vorstehenden Ansprüche, wobei das Beobachtungsintervall beginnt, wenn eine Druckerhöhung auf dem Gaspedal höher ist als ein dritter vordefinierter Schwellenwert (TH3).

7. Verfahren nach einem der vorstehenden Ansprüche, umfassend die folgenden Schritte ausgeführt in Reihenfolge:

- (Schritt 1) Überwachung der Position des Gaspedals;
- (Schritt 2) falls der Druck auf das Gaspedal um mindestens einen dritten Schwellenwert (TH3) zunimmt (JA), welcher Wert des Schwellenwerts in Prozenten dargestellt werden kann, zum Beispiel 3%, unter Berücksichtigung einer Position des kompletten Drucks (100%), dann
- (Schritt 3) Beginn des Beobachtungsintervalls und der Berechnung der Basisbewertung gleich dem Durchschnitt der Gaspedalposition, mittels gleitender Durchschnittsberechnung der Basisbewertung = F (Durchschnittsposition des Gaspedals), innerhalb des Beobachtungsintervalls, ansonsten (Schritt 2 = NEIN) wird die Gaspedalposition weiter überwacht (Schritt 1);
- (Punkt 4) Auftreten eines Unterbrechungsereignisses des Beobachtungsintervalls, welche eines der folgenden sein kann:

a) wenn eine Abweichung einer Fahrzeuggeschwindigkeit oder einer Motordrehzahl geringer als ein vordefinierter Schwellenwert der Fahrzeuggeschwindigkeit oder ein vordefinierter Schwellenwert der Motordrehzahl ist,
b) wenn ein Loslassen des Gaspedals eine negative Druckabweichung auf das Gaspedal, höher als ein zweiter vordefinierter Schwellenwert Th2, verursacht,
c) wenn eine Zeitüberschreitung eintritt, vorzugsweise mit einer Dauer von 6 Sekunden ab Anfang des Beobachtungsintervalls;

- (Schritt 5) Unterbrechung des Beobachtungsintervalls und Unterbrechung der Berechnung der Basisbewertung und Berechnung der Manöverbewertung:

$$\text{Manöverbewertung} = (S+L) * \text{Basisbewertung},$$

wenn CTimeout = falsch

$$\text{Manöverbewertung} = (S+L) * (\text{Basisbewertung} - P),$$

wenn CTimeout = wahr und Basisbewertung <= TH1
Manöverbewertung = ignoriert, wenn CTimeout = wahr und Basisbewertung > TH1;

- (Schritt 6) Berechnung eines Durchschnittswerts als gleitendes Mittel der Manöverbewertung; Überspringen eines Zyklus, falls eine entsprechende Manöverbewertung ignoriert wird.

8. Vorrichtung zur Evaluierung eines Fahrstils eines Fahrzeugs, umfassend Verarbeitungsmittel, Mensch/Maschine-Schnittstellenmittel und Schnittstellenmittel um Fahrzeugparameter wie zumindest eine Position des Gaspedals, eine Motordrehzahl und/oder eine Fahrzeuggeschwindigkeit zu akquirieren, wobei die Verarbeitungsmittel konfiguriert sind, um alle Schritte aus einem der vorstehenden Ansprüche 1 bis 8 auszuführen.

9. Landfahrzeug, umfassend eine Vorrichtung zur Evaluierung eines Fahrstils eines Fahrzeugs nach Anspruch 8.

**Revendications**

1. Procédé pour évaluer (rétroaction) un style de conduite de véhicule comprenant dans l'ordre les étapes suivantes :

- de détermination d'un BaseScore en relation avec une manoeuvre d'accélération, en fonction d'une position moyenne d'une pédale d'accélérateur de véhicule dans un intervalle de temps d'observation,
- d'interruption dudit intervalle d'observation sur la base d'un événement d'interruption, dans lequel ledit événement d'interruption peut être de deux types ou plus,
- de calcul d'un ManoeuvreScore, en fonction d'une valeur dudit BaseScore et du type d'événement, parmi lesdits deux types d'événement ou plus, qui a provoqué ladite interruption dudit intervalle d'observation.

**2.** Procédé selon la revendication 1, dans lequel ledit événement d'interruption consiste en un seul :

- d'un premier type (a) : lorsqu'une variation d'une vitesse de véhicule ou d'une vitesse de moteur à combustion interne est inférieure à un seuil de vitesse de véhicule prédéfini ou à un seuil de vitesse de moteur à combustion interne prédéfini,
- d'un deuxième type (b) : lorsqu'un relâchement de la pédale d'accélérateur détermine une variation de pression négative sur la pédale d'accélérateur supérieure à un deuxième seuil prédéfini,
- d'un troisième type (c) : lorsqu'un dépassement de délai intervient.

**3.** Procédé selon l'une quelconque des revendications précédentes, dans lequel ledit ManoeuvreScore est égal

- audit BaseScore si ledit intervalle d'observation n'est pas interrompu par ledit troisième type d'événement,
- audit BaseScore duquel une valeur de pénalisation est soustraite lorsque ledit intervalle d'observation est interrompu par ledit troisième type d'événement et lorsque ledit BaseScore est inférieur ou égal à une première valeur de BaseScore prédéfinie (TH1).

**4.** Procédé selon l'une quelconque des revendications précédentes, comprenant en outre une étape de calcul de manière itérative d'un score moyen desdits Manoeuvrescores.

**5.** Procédé selon la revendication 3 ou 4, comprenant en outre une étape de calcul de manière itérative d'un score moyen, sur la base d'une moyenne desdits Manoeuvrescores, et de saut d'une étape d'itération lorsque ledit intervalle d'observation est interrompu par ledit troisième type d'événement et lorsqu'un BaseScore correspondant est supérieur à ladite première valeur de BaseScore prédéfinie (TH1).

**6.** Procédé selon l'une quelconque des revendications précédentes, dans lequel ledit intervalle d'observation commence lorsqu'une augmentation de pression sur la pédale d'accélérateur est supérieure à un troisième seuil prédéfini (TH3).

**7.** Procédé selon l'une quelconque des revendications précédentes comprenant les étapes suivantes effectuées dans l'ordre :

- (Etape 1) surveillance de la position de la pédale d'accélérateur ;
- (Etape 2) si la pression sur la pédale d'accélérateur est augmentée d'au moins un troisième seuil TH3 (Oui), la valeur dudit troisième seuil peut être exprimée en termes de pourcentage, par exemple 3 %, par rapport à une position de pression totale (100 %), alors
- (Etape 3) début de l'intervalle d'observation et calcul du BaseScore égal à la moyenne de la position d'accélérateur, au moyen d'un calcul de moyenne mobile BaseScore = F (position moyenne de la pédale d'accélérateur), sur l'intervalle d'observation, autrement (Etape 2 = Non) la position de la pédale d'accélérateur continue d'être surveillée (Etape 1) ;
- (Point 4) apparition d'un événement d'interruption de l'intervalle d'observation, qui peut être l'un de :

a) lorsqu'une variation d'une vitesse de véhicule ou d'une vitesse de moteur à combustion interne est inférieure à un seuil de vitesse de véhicule prédéfini ou à un seuil de vitesse de moteur à combustion interne prédéfini,
b) lorsqu'un relâchement de la pédale d'accélérateur détermine une variation de pression négative sur la pédale d'accélérateur, supérieure à un deuxième seuil prédéfini Th2,
c) : lorsqu'un dépassement de délai intervient, de préférence avec une durée de 6 secondes à partir du début de l'intervalle d'observation ;

- (Etape 5) interruption de l'intervalle d'observation et interruption du calcul de BaseScore et calcul du ManoeuvreScore :

$$\text{ManoeuvreScore} = (S+L) * \text{BaseScore}$$

lorsque CTimeout = faux

$$\text{ManoeuvreScore} = (S+L) * (\text{BaseScore} - P)$$

lorsque CTimeout = vrai et BaseScore $\leq$ TH1
ManoeuvreScore = ignoré lorsque CTimeout = vrai et BaseScore > TH1.

- (Etape 6) calcul d'un score moyen en tant que moyenne mobile sur les Manoeuvrescores, saut d'un cycle si un ManoeuvreScore respectif est ignoré.

8. Dispositif pour évaluer un style de conduite de véhicule comprenant des moyens de traitement, des moyens formant interface homme/machine et des moyens formant interface pour acquérir des paramètres de véhicule tels qu'au moins une position de la pédale d'accélérateur, une vitesse du moteur à combustion interne et/ou une vitesse de véhicule, dans lequel lesdits moyens de traitement sont configurés pour effectuer toutes les étapes de l'une quelconque des revendications 1 à 8 précédentes.

9. Véhicule terrestre comprenant un dispositif pour évaluer un style de conduite de véhicule selon la revendication 8.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130173111 A
- WO 2012069915 A
- US 20090076697 A